# EUROPÄISCHE PATENTSCHRIFT

(11) **EP 0 616 759 B1**
(45) Veröffentlichungstag und Bekanntmachung des Hinweises auf die Patenterteilung: **28.05.1997**
(21) Anmeldenummer: 94103015.7
(22) Anmeldetag: 01.03.1994
(51) Int. Cl.: A01C 3/02, C12M 1/04, A23J 1/00

(54) **Verfahren und Vorrichtung zur Gewinnung eines konzentrierten Eiweissexstraktes aus der Flüssigkeit von Gülle**
Process and apparatus to produce concentrated protein extract from liquid phase of manure
Procédé et dispositif pour obtenir un extrait de protéines concentré à partir du liquide de lisier

(30) Priorität: 22.03.1993 DE 4309129; 05.11.1993 DE 4337754
(43) Veröffentlichungstag der Anmeldung: 28.09.1994
(73) Patentinhaber: Gojcic, Otmar, D-27578 Bremerhaven (DE); Lührs, Peter, D-28865 Lilienthal (DE)
(72) Erfinder: Gojcic, Otmar, D-27578 Bremerhaven (DE); Lührs, Peter, D-28865 Lilienthal (DE)
(74) Vertreter: von Ahsen, Erwin-Detlef

(56) Entgegenhaltungen:
- DD-A- 99 768
- DE-A- 3 537 310
- DE-B- 2 739 221
- FR-A- 2 503 181

## Beschreibung

Die Erfindung bezieht sich auf ein Verfahren und eine Vorrichtung zur biologischen Aufbereitung von Gülle zum Zwecke ihrer Reinigung und Wiedergewinnung von Wertstoffen.

Aus ökologischer Sicht sind biologische Verfahren zur Reinigung tierischer Exkremente in möglichst komplex konstruierten Vorrichtungen zu bevorzugen. Bekannt sind aerobe Verfahren, bei denen Lebensgemeinschaften aus Mikroorganismen die gewünschte Reinigung bewirken. Unter ständiger Luft-Sauerstoff-Zufuhr werden diesen Mikroorganismen Lebensbedingungen geschaffen, so daß sie sich rasch vermehren und eine biologische Umsetzung der Feststoffe in der Gülle bewirken. Bei einem sogenannten Belebtschlammverfahren wird der Schlamm nachfolgend vom Wasser getrennt und zum Beispiel als Düngemittel wiederverwendet, wobei ein Teil als Rücklaufschlamm mit Katalysatorfunktion in den Prozeß zurückgeführt wird.

Aus der DD 146 616, welche alle Merkmale des Oberbegriffes zeigt, ist ein Verfahren zur Gewinnung eines konzentrierten Eiweißextraktes aus Gülle durch Beimengung einer schnellwachsenden Hefe mit hohem Kohlenstoffgehalt, einem hohen Sauerstoffanteil sowie Stickstoff, Wasserstoff und außerdem nach einer Analyse der Gülle dosierte Spurenelemente unter einer Temperatur in einem Bereich von vorzugsweise 30 - 40° Celsius und bei einem pH-Wert zwischen 3 und 8 bekannt. Die Gewinnung des Eiweißextraktes erfolgt bei Verweilzeiten zwischen 2 und 15 Stunden.

Die DE 41 20 143 -C1- beschreibt eine Vorrichtung zur biologischen Behandlung von Gülle und dergleichen organisch verunreinigter Flüssigkeit, bei der ein um eine vertikale Achse in einem mit Gülle aufnehmenden Behälter drehendes Rührwerk mit durch die Drehung angeströmten Rührelementen vorgesehen ist. Diese Rührelemente werden durch siebartige, um Achsen winklig zur Drehachse des Rührwerks beweglich angeordnete Schwenkplatten gebildet, die etwa quer zur Anströmung bei der Drehung des Rührwerks in der Gülle eintauchen. Zweck dieser Maßnahme ist die Schaffung einer möglichst großen Besiedelungsfläche für Mikroorganismen mit dem Zweck einer verbesserten Reinigungswirkung.

In der DE 33 19 276 -A1- wird ein Verfahren zur Belüftung von Gülle beschrieben, bei dem eine bestimmte Luftmenge blasenfrei von unten und eine andere Menge in wählbaren Intervallen unter Bildung großer Blasen zugeführt wird, um dadurch eine schonende Begasung und alternativ eine Röhrenwirkung zu erzielen. Eine Güllebehandlung in mehreren aufeinanderfolgenden Stufen ist aus der DE 32 43 103 -A1- bekannt.

Aufgabe der Erfindung ist die Gestaltung des technischen Verfahrensablaufes zur Gewinnung eines konzentrierten Eiweißextraktes aus der von Feststoffen weitestgehend befreiten Gülle.

Zur Lösung dieser Aufgabe sieht die Erfindung einen Verfahrensablauf entsprechend Anspruch 1 vor.

Diesem Verfahren liegt die Überlegung zugrunde, daß hochproduktive, schnellwachsende Hefen die Fähigkeit haben, die biogenen Elemente aus den organischen Feststoffen der tierischen Exkremente aktiv zu assimilieren und dabei eine beträchtliche Menge an Biomasse mit einem hohen Eiweißgehalt anzuhäufen, der bis zu 60% der Trockenmasse erreichen kann. Dabei stellt sich auch ein hoher Abreinigungsgrad der verbleibenden Restflüssigkeit ein. Für die Hefezüchtung ist eine Vielzahl von Rohstoffen, in denen Kohlenwasserstoffe vorkommen, geeignet, zum Beispiel Paraffine, Hydrolysate aus Holz, Ethanol, Erdgas und anderen. Die Hefezellen aggregieren im Verlauf der Fermentation nicht und lassen sich leicht abtrennen, sobald die notwendige Konzentration erreicht ist. Die Zusammensetzung der Hefe kann vorzugsweise 43% Kohlenwasserstoff, 30% Sauerstoff, 7,5% Stickstoff, 6,5% Wasserstoff, 1,5% Phosphor, 1% Schwefel, 0,5% Magnesium und 8% Asche jeweils in der Trockenmasse enthalten. Eine Analyse ist in der nachfolgenden Tabelle enthalten:

| Bestandteil | Gehalt in % der Trockenmasse |
|---|---|
| Kohlenwasserstoff | 43 |
| Sauerstoff | 30 |
| Stickstoff | 7,5 |
| Wasserstoff | 6,5 |
| Phosphor | 1,5 |
| Schwefel | 1 |
| Magnesium | 0,5 |
| Asche | 8 |

In der Asche sind Mg, Cu, Co, Fe, Mn, Mo, Zn, Ca, K und Na enthalten. Die Schweinegülle enthält entsprechend nachstehender Tabelle mit Ausnahme der Kohlenwasserstoffe alle für das Züchten von Futterhefe notwendigen Elemente, wobei Zink und Mangan in etwas kleineren Mengen vorkommen.

| Bestandteile | Anteil bei der Hefezüchtung auf n-Paraffinen in mg/l | Anteil in den Abgängen (Gülle) in mg/l |
|---|---|---|
| N | 300 | 700 |
| P | 100 - 150 | 350 |
| K | 120 | 200 |
| Mg | 20 | 30 |
| Fe | 7 - 10 | 16 |
| Zn | 3 - 5 | 1-2 |
| Mn | 3 | 0,5 |
| Cu | 0,005 | 0,01 |
| Süßstoffe in g/l | 1 | |

Der optimale ph-Wert bei der Hefezüchtung liegt bei 4-5,5. Dieser ph-Wert ist notwendig für die Unterdrückung der natürlichen bakteriellen Mikroflora, die in der Gülle enthalten ist und für die das ph-Optimum bei 6-7,5 liegt. Werden optimale Züchtungsbedingungen geschaffen, ist die bakterielle Mikroflora in der Lage, die Gülle zu reinigen und Eiweißbiomasse anzuhäufen. Beispielsweise wurden bei der Reinigung von Gülle nach der ersten Reinigungsstufe in einem Belebtschlammbecken Melasse und Eisensulfat(FeSo₄)-Lösung in der notwendigen Menge beigegeben. Die gezüchtete Biomasse enthielt 62,7% Eiweiß. Der Reinigungsgrad der Gülle wird durch die Daten in der nachfolgenden Tabelle veranschaulicht:

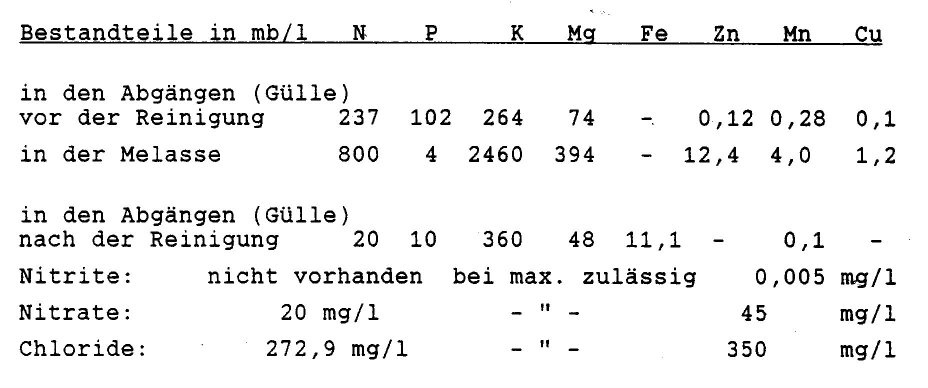

Unbestreitbar ist auch die wirtschaftliche Zweckmäßigkeit der Züchtung von Futterhefe auf bei der Schweinezucht anfallenden Abgängen. Es genügt, Einheitspreise der Rohstoffe und Reagenzien für den Erhalt von 1 t Futterhefe zu vergleichen (sh.Tabelle):

| Rohstoff bzw. Reagenz | industrielle Züchtung von Futterhefe auf n-Paraffinen | Züchtung von Futterhefe auf bei der Schweinezucht anfallenden Abgängen |
|---|---|---|
| Paraffin | 1851 | 1851 |
| Ammoniak-Phosphor | 2400 | - |
| N-Ph-flüssig | 3100 | - |
| Ammoniakwasser | 143,3 | - |
| Kalium | 240 | - |
| Zink | 1045,8 | 500 |
| Mangan | 1170 | 600 |
| Natriumhydroxid | 579 | 1000 |
| Gesamtkosten | 10529,1 | 3351 |

Die wirtschaftliche Zweckmäßigkeit der Züchtung von Futterhefe auf den Nährstoffen in Schweinegülle ist unbestritten. Dies ergibt sich ohne weiteres aus einem Vergleich der Kosten für Rohstoffe und Reagenzien zur industriellen Züchtung von Futterhefe auf Paraffinen und der Kosten für die Züchtung von Futterhefe auf Nährstoffen der Schweinegülle.

Auf der Zeichnung sind Ausführungsbeispiele einer Vorrichtung zur Durchführung eines Verfahrens nach der Erfindung stark schematisiert dargestellt. Es zeigen:
- Figur 1: eine Seitenansicht einer solchen Vorrichtung,
- Figur 2: eine Draufsicht auf ein anderes Ausführungsbeispiel einer Vorrichtung,
- Figur 3: eine Stirnansicht der Vorrichtung nach Figur 2 und
- Figur 4: eine gegenüber Figur 3 um 90° versetzte Seitenansicht.

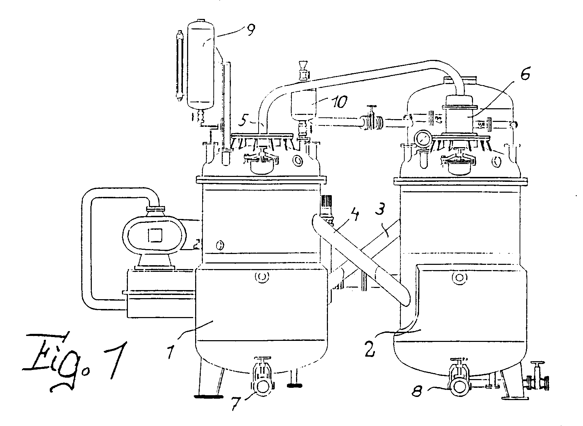

Zur Durchführung des erfindungsgemäßen Verfahrens sind bei dem Ausführungsbeispiel nach Figur 1 wenigstens zwei Behälter 1 und 2 vorgesehen, deren Innenräume durch Leitungen 3 und 4 miteinander verbunden sind. Diese Leitungen 3 und 4 sind mit ihrem einen Ende im unteren Bereich an den einen Behälter und mit dem anderen Ende im oberen Bereich an den anderen Behälter angeschlossen. An der Oberseite beider Behälter 1 und 2 sind Anschlüsse 5 und 6 zur separaten Druckluftbeaufschlagung und Druckentspannung jedes der beiden Behälter 1 und 2 vorgesehen. An der Unterseite beider Behälter 1 und 2 befinden sich Ausläufe 7 und 8 für die Flüssigkeit. Wenigstens ein Behälter 1 ist mit Einrichtungen 9 und 10 zur dosierten Zugabe für das Verfahren benötigten Zuschlagstoffe bestückt. In dem Ausführungsbeispiel bestehen die Mittel zur separaten Druckbeaufschlagung aus einem Mehrwegeventil 6 und einer Leitung 5, so daß die von einer auf der Zeichnung nicht dargestellten Quelle zugeführte Druckluft durch das Mehrwegeventil 6 wahlweise über die Leitung 5 in den Behälter 1 oder unmittelbar in den Behälter 2 geleitet werden kann.

Die Wirkungsweise der Vorrichtung ergibt sich wie folgt. In beide Behälter 1 und 2 wird die von Feststoffen, zum Beispiel durch Zentrifugieren, weitestgehend befreite Gülle bis zu einer bestimmten Füllstandshöhe eingefüllt. Der Gülle wird Saathefe in einer vorbestimmten Menge beigegeben. Eine Ventilsteuerung bewirkt das Einströmen von Druckluft in einen der beiden Behälter 1 oder 2. In diesem Behälter bildet sich somit ein geringer Überdruck, wodurch ein entsprechender Teil des Flüssigkeitsvolumens über eine der beiden Leitungen 3 bzw. 4 in den anderen Behälter gedrückt wird. Die besondere Anordnung der Leitungen 3 und 4 hat zur Folge, daß die verdrängte Flüssigkeit unten aus dem Behälter abströmt und oben in den Nachbarbehälter einströmt. Durch am Ausgang der Leitungen 3 und 4 angeordnete Verschlüsse gelangen die oberen Flüssigkeitsschichten allmählich in die Leitungen 3 und 4 und ballen sich im unteren Teil des benachbarten Behälters unter einem Winkel von 30° zur Oberfläche der Flüssigkeit ausgerichteten Strahl. Dieser Strahl dispergiert die aus dem unter Druck stehenden Behälter austretende Luft und rührt die Flüssigkeit in dem drucklosen Behälter. Ein solches Einrührverfahren schließt Schaumbildung und Flotation der Hefe aus, so daß auf die Beimengung eines chemischen Antischaummittels verzichtet werden kann und ein Endprodukt erreicht wird, welches frei ist von solchen Zusätzen.

Bei dem auf der Zeichnung dargestellten Ausführungsbeispiel sind zwischen den beiden Behältern 1 und 2 lediglich zwei Überströmleitungen 3 und 4 dargestellt. Die Zahl dieser Leitungen kann jedoch zur Optimierung des Verfahrensprozesses erhöht werden. Eine Anordnung der Leitungen 3 und 4 unter einem Winkel von etwa 45° zur Vertikalen ist empfehlenswert, um die zuvor erwähnte Strahlrichtung von etwa 30° der aus einer Leitung im oberen Bereich in den Behälter eintretenden Flüssigkeit zu erreichen. Dargestellt ist lediglich ein Vorrichtungsschema, dessen optimale Gestaltung und Betriebskonditionen empirisch ermittelt und bestimmt werden.

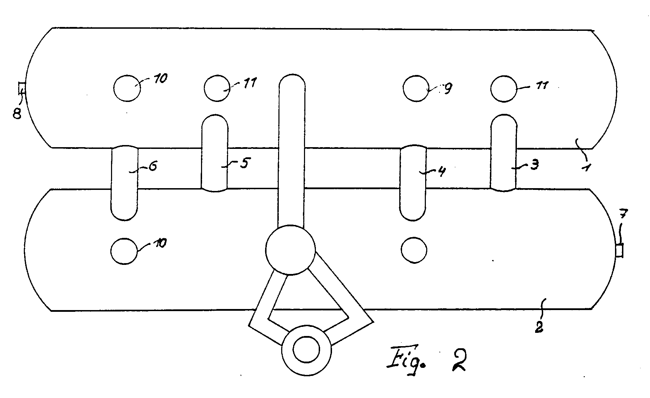

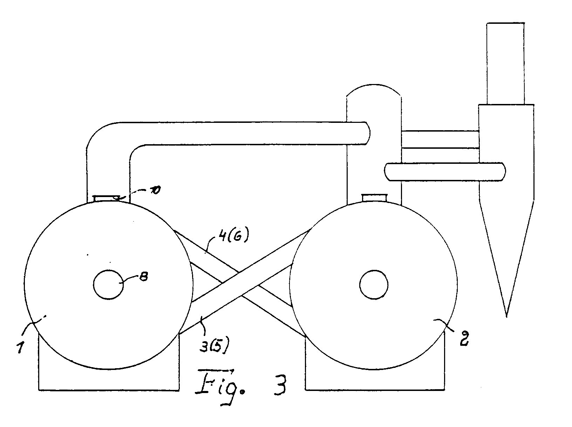

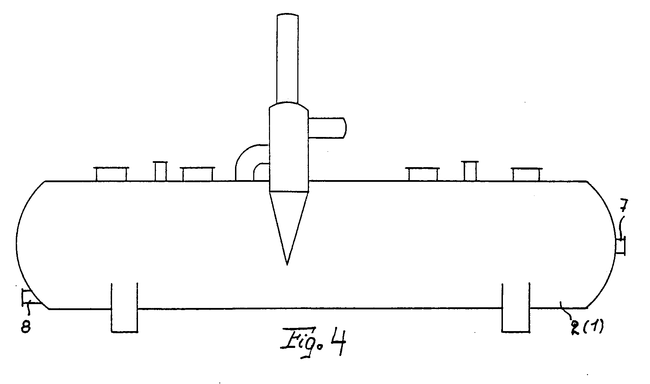

Die Vorrichtung nach dem Ausführungsbeispiel der Figuren 2 bis 4 besteht aus zwei liegend nebeneinander und parallel zueinander angeordneten Behältern 1 und 2, deren Innenräume in wenigstens einem Abschnitt der Behälterlängsrichtung, vorzugsweise jedoch auf ganzer Länge der Behälter 1 und 2, in mehreren Abschnitten durch Rohre 11 und 12 bzw. 13 und 14 miteinander verbunden sind. Die beiden Rohre 11 und 12 bzw. 13 und 14 jedes Rohrpaares sind zueinander entgegengesetzt geneigt angeordnet, so daß jedes Rohr mit dem einen Ende unten an den einen Behälter und mit dem anderen Ende oben an den anderen Behälter angeschlossen ist, wie es zeichnerisch aus der Darstellung in Figur 2 hervorgeht. An dem Stirnende des einen Behälters 2 ist ein Zulaufanschluß 7 und an dem in Behälterlängsrichtung gegenüberliegenden Ende des anderen Behälters ist ein Abflußanschluß 8 vorgesehen. Der Behälter 1 ist außerdem mit einem Anschluß 9 für eine Heizung, und beide Behälter 1 und 2 sind mit Anschlüssen 10 für die Luftzufuhr versehen. Die schon erwähnten Hilfseinrichtungen, wie Pumpen, Separatoren, Trockner und dergleichen, sind auf der Zeichnung nicht dargestellt, weil sie handelsüblichen Ausbildungen entsprechen können. Die Herstellung der Behälter 1 und 2 sowie ihrer Rohrverbindungen 11 und 12 bzw. 13 und 14 erfolgt vorzugsweise aus Stahl.

### BEZUGSZEICHENLISTE:

- 1: Behälter
- 2: Behälter
- 3: Leitung
- 4: Leitung
- 5: Anschlüsse
- 6: Anschlüsse
- 7: Ausläufe
- 8: Ausläufe
- 9: Einrichtung für Zuschlagstoffe
- 10: Einrichtung für Zuschlagstoffe
- 11: Rohr
- 12: Rohr
- 13: Rohr
- 14: Rohr

## Patentansprüche

1. Verfahren zur Gewinnung eines konzentrierten Eiweißextraktes aus Gülle durch Beimengung einer schnellwachsenden Hefe mit einem hohen Kohlenstoffgehalt, einem hohen Sauerstoffanteil sowie Stickstoff, Wasserstoff und Spurenelementen deren Dosierung nach einer Analyse der Gülle erfolgt, dadurch gekennzeichnet, daß die Hefe der durch Zentrifugieren von Feststoffen weitestgehend befreiten Gülle beigemengt wird und die Gülle bei einer Temperatur von etwa 37° Celsius sowie unter Einwirkung eines geringen Überdruckes bis zur Bildung eines Eiweißassimilats in einem Kreislauf mit Beschleunigungsstrecken und Beruhigungsintervallen umgewälzt und die verbleibende Flüssigkeit anschließend abgezogen wird.

2. Verfahren nach Anspruch 1, dadurch gekennzeichnet, daß die Umwälzung in kleineren Teilströmen zwischen größeren Beruhigungsmengen erfolgt.

3. Vorrichtung zur Ausübung des Verfahrens nach Anspruch 1, dadurch gekennzeichnet, daß sie
- wenigstens zwei Behälter (1,2), deren Innenräume durch Leitungen (3,4) miteinander verbunden sind, welche abwechselnd mit einem Ende unten an den einen Behälter und mit dem anderen Ende oben an den anderen Behälter angeschlossen sind,
- Mittel (5,6) zur separaten Druckbeaufschlagung und Druckentspannung jedes der beiden Behälter (1,2),
- absperrbare Ausläufe (7,8) für Flüssigkeit aus den Behältern und
- Einrichtungen (9,10)zur dosierten Zugabe von Zuschlagstoffen in die Behälter
aufweist.

4. Vorrichtung nach Anspruch 3, dadurch gekennzeichnet, daß die beiden oberen Behälterenden durch eine weitere Leitung mit einem darin angeordneten Absperrventil miteinander verbunden sind.

5. Vorrichtung nach den Ansprüchen 3 und 4, dadurch gekennzeichnet, daß die Leitungen (5,6) zwischen den beiden Behältern (1,2) unter einem Winkel von etwa 45° gegenüber der Vertikalen angeordnet sind.

6. Vorrichtung nach Anspruch 1 und einem der Ansprüche 3 bis 5, dadurch gekennzeichnet, daß
- die Innenräume zweier langgestreckter, liegend nebeneinander angeordneter Behälter (1,2) in wenigstens einem Teilbereich der einen Behälterenden durch Rohre (12,13) miteinander verbunden sind, deren eines Ende unten an den einen der beiden Behälter und deren anderes Ende oben an den anderen der beiden Behälter angeschlossen ist,
- wenigstens ein Behälter (2) an diesem Ende einen Zulaufanschluß (7) für die Gülle und wenigstens ein Behälter (1) am gegenüberliegenden Behälterende einen Abflußanschluß (8) für das Ferment aufweist und
- wenigstens ein Behälter (1) mit einer Heizung (9) sowie beide Behälter (1,2) mit Mitteln zur Luftzufuhr (10) und Druckbeaufschlagung des Behälterinnenraumes ausgerüstet sind.

7. Vorrichtung nach Anspruch 6, dadurch gekennzeichnet, daß die beide Behälterinnenräume miteinander verbindenden Rohre (11,12) in mehreren Abschnitten (13,14) vorgesehen sind.

8. Vorrichtung nach Anspruch 6, dadurch gekennzeichnet, daß die die Innenräume beider Behälter (1,2) miteinander verbindenden Rohre (11,12 bzw. 13,14) in mehreren Abschnitten auf ganzer Länge der beiden Behälter (1,2) angeordnet sind.

9. Vorrichtung nach den Ansprüchen 6 und 8, dadurch gekennzeichnet, daß der Zulaufanschluß (7) für die Gülle an einem Ende des einen Behälters (2) und der Abflußanschluß (8) für das Ferment am gegenüberliegenden Ende des anderen Behälters (1) angeordnet ist.

## Claims

1. Process for obtaining a concentrated protein extract from liquid manure by adding a rapidly growing yeast with a high carbon content, a high oxygen fraction as well as nitrogen, hydrogen and trace elements which are metered according to an analysis of the liquid manure, characterised in that the yeast is added to the liquid manure, which is largely liberated by centrifuging solid matter, the liquid manure is circulated in a circuit with acceleration sections and moderating intervals at a temperature of approximately 37° Celsius and under the effect of a pressure slightly above atmospheric until a protein assimilate is formed, and the remaining liquid is subsequently drawn off.

2. Process according to claim 1, characterised in that the circulation takes place in relatively small partial streams between greater moderating quantities.

3. Device for carrying out the process according to claim 1, characterised in that it comprises
- at least two vessels (1, 2), the interiors of which communicate with one another via conduits (3, 4), which are alternately connected by one end at the bottom to one vessel and by the other end at the top to the other vessel,
- means (5, 6) for separately pressurizing each of the two vessels (1, 2) and relieving them of pressure,
- outlets (7, 8), which can be shut off, for liquid leaving the vessels and
- devices (9, 10) for feeding additives into the vessels in a metered manner.

4. Device according to claim 3, characterised in that the two top vessel ends communicate with one another via another conduit with a shutoff valve disposed therein.

5. Device according to claims 3 and 4, characterised in that the conduits (5, 6) between the two vessels (1, 2) are disposed at an angle of approximately 45° to the vertical.

6. Device according to claim 1 and one of claims 3 to 5, characterised in that
- the interiors of two elongate vessels (1, 2) disposed horizontally side-by-side communicate with one another in at least one sub-region of one vessel end via pipes (12, 13), one end of which is connected at the bottom to one of the two vessels and the other end of which is connected at the top to the other of the two vessels,
- at least one vessel (2) comprises at this end an intake connection (7) for the liquid manure and at least one vessel (1) comprises at the opposite vessel end a discharge connection (8) for the ferment and
- at least one vessel (1) is provided with a heating unit (9) and both vessels (1, 2) are provided with means for supplying air (10) and pressurizing the vessel interior.

7. Device according to claim 6, characterised in that the pipes (11, 12) via which the two vessel interiors communicate with one another are provided in a plurality of sections (13, 14).

8. Device according to claim 6, characterised in that the pipes (11, 12 or 13, 14) via which the interiors of the two vessels (1, 2) communicate with one another are disposed in a plurality of sections over the entire length of the two vessels (1, 2).

9. Device according to claims 6 and 8, characterised in that the intake connection (7) for the liquid manure is disposed at one end of one vessel (2) and the discharge connection (8) for the ferment is disposed at the opposite end of the other vessel (1).

## Revendications

1. Procédé pour obtenir un extrait concentré de protéines à partir de lisier, par ajout d'une levure à croissance rapide contenant une haute teneur en carbone, une grande quantité d'oxygène ainsi que de l'azote, de l'hydrogène et des éléments traces dont le dosage est effectué après une analyse du lisier, caractérisé en ce que la levure est ajoutée au lisier libéré des solides par centrifugation, et en ce que le lisier est remué à une température d'environ 37 °C et sous l'action d'une faible surpression, jusqu'à formation d'un produit d'assimilation protéinique dans un cycle avec des périodes d'accélération et des intervalles de calme, et le liquide restent est finalement retiré.

2. Procédé selon la revendication 1, caractérisé en ce le mélange a lieu par des petits courants parties entre des plus grandes quantités au calme.

3. Dispositif pour la mise en oeuvre du procédé selon la revendication 1, caractérisé en ce qu'il comprend
• au moins deux réservoirs (1, 2) dont les intérieurs sont reliés entre eux par des conduites (3, 4) qui sont reliées à une extrémité au bas d'un réservoir et à l'autre extrémité au haut de l'autre réservoir alternativement,
• des moyens (5, 6) pour mettre sous pression et pour détendre séparément chacun des deux réservoirs (1, 2),
• des orifices d'évacuation fermables (7, 8) pour les liquides des réservoirs et
• des équipements (9, 10) pour l'ajout dosé d'additifs dans les réservoirs.

4. Dispositif selon la revendication 3, caractérisé en ce que les deux extrémités supérieures des réservoirs sont reliées entre elles par une conduite supplémentaire munie d'une vanne d'arrêt.

5. Dispositif selon les revendications 3 et 4, caractérisé en ce que les conduites (5, 6) entre les deux réservoirs (1, 2) sont disposées avec un angle de 45° environ par rapport à la verticale.

6. Dispositif selon la revendication 1 et une des revendications 3 à 5, caractérisé en ce que
• les intérieurs de deux réservoirs allongés (1, 2) disposés côte à côte sont reliés entre eux, sur au moins une région d'une extrémité de réservoir, par des tuyaux (12, 13) dont une extrémité est reliée au bas de l'un des deux réservoirs et l'autre extrémité au haut de l'autre des deux réservoirs,
• au moins un réservoir (2) présente à cette extrémité un raccord de charge (7) pour le lisier et au moins un réservoir (1) présente à l'extrémité opposée un raccord de décharge (8) pour le ferment, et
• au moins un réservoir (1) est équipé d'un chauffage (9) et les deux réservoirs (1, 2) sont équipés de raccords (10) pour l'introduction d'air et la mise en surpression de l'intérieur du réservoir.

7. Dispositif selon la revendication 6, caractérisé en ce que les intérieurs des deux réservoirs sont munis de tuyaux (11, 12) les reliant en plusieurs secteurs (13, 14).

8. Dispositif selon la revendication 6, caractérisé en ce que les tuyaux (11, 12 et 13, 14) reliant les intérieurs des deux réservoirs sont disposés en plusieurs secteurs sur toute la longueur des deux réservoirs (1, 2).

9. Dispositif selon les revendications 6 et 8, caractérisé en ce que le raccord de charge (7) pour le lisier est disposé à une extrémité de l'un des réservoirs (2) et en ce que le raccord de décharge (8) pour le ferment est disposé à l'extrémité opposée de l'autre réservoir (1).
